# EUROPEAN PATENT SPECIFICATION

(11) **EP 0 740 684 B1**
(45) Date of publication and mention of the grant of the patent: **22.09.1999**
(21) Application number: 95908446.8
(22) Date of filing: 17.01.1995
(51) Int. Cl.: C08K 7/26, C08L 23/08, C08K 3/34, C08L 33/02, A61L 2/16

(54) **DEODORIZED THERMOPLASTICS**
DEODORIERTE THERMOPLASTE
THERMOPLASTIQUES DESODORISES

(30) Priority: 19.01.1994 EP 94200102
(43) Date of publication of application: 06.11.1996
(73) Proprietor: E.I. DU PONT DE NEMOURS AND COMPANY, Wilmington Delaware 19898 (US)
(72) Inventor: TROUILHET, Yves, CH-1222 Vésenaz (CH)
(74) Representative: Abitz, Walter, Dr.-Ing.
(86) International application number: US9500207
(87) International publication number: WO9520624

(56) References cited:
- EP-A- 0 297 543
- EP-A- 0 395 104
- WO-A-92/13029
- GB-A- 2 263 903
- US-A- 4 735 972
- US-A- 4 795 482
- US-A- 4 833 181
- US-A- 4 840 823
- US-A- 5 063 256
- DATABASE WPI Week 8542 Derwent Publications Ltd., London, GB; AN 85-261191 XP002025732 & JP 60 176 659 A (TOPPAN PRINTING KK) , 10 September 1985

## Description

### Background of the Invention

The present invention relates to the field of thermoplastic compositions suitable for extrusion into films and moulding into shaped articles, more particularly to such compositions containing adsorbents adapted to inhibit offensive odours and flavours of such films and shaped articles.

### Background of the Invention

Many films and shaped articles adapted for packaging applications have the unwanted characteristic of possessing undesirable odours and flavours. Such odours and flavours may make the packaging unsuitable for various applications, e.g. in the area of food or hygienic packaging or, in general, any packaging with which man comes into contact. Typically, these undesirable odours and flavours are generated during production of the film or shaped article, e.g. during the extrusion or moulding process.

Various solutions have been proposed for eliminating or inhibiting odours and flavours in thermoplastic films. Adsorbents such as zeolites, diatomaceous earth, clays, activated carbons and the like have been incorporated into certain polymer or copolymers with varying results (cf. e.g. WO 92/13029, WO 92/13899, JP 62032-144, JP 63151-451 and JP 02208-346).

It has now been found that various adsorbents will not only inhibit odours and flavours in particular thermoplastics, but also. that such adsorbents will have a surprising. beneficial effect on various performance characteristics, such as adhesion, heat seal strength, hot tack strength and coefficient of friction of the films produced from thermoplastic compositions containing the adsorbents.

### Summary of the Invention

The instant invention relates particularly to a thermoplastic composition comprising (a) a thermoplastic selected from the group consisting of ethylene/acid copolymers and corresponding ionomers; and ethylene/acid/acrylate terpolymers and corresponding ionomers; and (b) an adsorption agent; to thermoplastic films and shaped articles obtainable from this composition; and the use of adsorbents in adsorbing odours and flavours in the aforementioned thermoplastics.

As used herein, terms used have the following meanings.

Ethylene/acid copolymer and their corresponding ionomers are well known in the art to be copolymers of ethylene with an olefinically unsaturated organic mono- or di-acid such as acrylic or methacrylic acid, or maleic acid or fumaric acid or their anhydrides, the acid (or anhydride) comprising about 0.5 to 50 mole percent of the total polymeric material. The ethylene/acid copolymers and their methods of preparation are well known in the art and are disclosed in, for example US. Pat. Nos. 3,264,272, 3,404,134, 3,355,319 and 4,321,337. The copolymers are termed ionomers when the acid is neutralized in whole or in part to produce a salt. The cation for said salts is usually an alkali metal such as sodium or potassium or is zinc or the like.

Ethylene/acid/acrylate terpolymers and corresponding ionomers are well known in the art to be copolymers of ethylene, an olefinically unsaturated organic acid such as acrylic or methacrylic acid and an alkyl acrylate or methacrylate termonomer (e.g. n-butyl acrylate or methacrylate or isobutylacrylate).

Preferred thermoplastics are ionomers that are copolymers of ethylene and 2 to 50%, more preferably 5 to 25%, by weight acrylic or methacrylic acid neutralized up to about 90%, more preferably from 5 to 60% with an alkali metal ion or a divalent or trivalent metal ion, the melt index of the copolymer, whether neutralized or unneutralized, being about 0.1 to 30, preferably 0.5 to 20, dg/min. according to ASTM Standard D1238 (condition E).

Suitable acid copolymers and ionomers are available from the DuPont Company under the trade names Nucrel® and Surlyn®, respectively.

Adsorption agents are known per se. Suitable such agents include powders of diatomaceous earth, clay, kaolin, talc, bentonite, activated carbon and zeolites. Preferred adsorption agents are zeolites, and in particular siliceous molecular sieves.

Suitable siliceous molecular sieves are known in the art, see e.g. EP-B-0 297 543, and have a framework of tetrahedral oxide units, in which at least 90% of the tetrahedral oxide units are SiO tetrahedra, have a pore diameter greater than 0.55 nm (5.5 Angstroms) (preferably at least 0.6 nm (6.0 Angstroms)) and have a sorption capacity for water of less than 10 % by weight at 25 °C and 6.13 mbar (4.6 torr) (preferably less than 6 % by weight).

Preferred such sieves will have a framework SiO₂/Al₂O₃ molar ratio greater than 35, more preferably 200 to 500.

Suitable siliceous molecular sieves are available under the tradename Abscents® from UOP.

The amount of adsorbent in the polymer or copolymer composition according to the invention will depend upon various factors including the particular copolymer or terpolymer used. Typically, the adsorbent agent will comprise at least 0.5% by weight of the composition, more typically 0.5 to 2.0 % by weight of the composition as employed in the end product (film or shaped article) and up to about 30% by weight in the case of a "masterbatch" of composition.

In addition to the above-mentioned composition components, the thermoplastic composition of the present invention may further contain other additional polymeric components as well as the usual additional ingredients and additives conventionally employed in the art for various purposes in polymer compositions, such as, for example, dyes, pigments, fillers, antioxidants, fire-retarding agents, etc. When such optional ingredients are employed, their usage is generally in the content range or loading level typically utilized in the art for such purposes.

Films and shaped articles according to the invention can be made by conventional methods, e.g. extrusion coating, blown and cast film processing and injection moulding.

### Examples

Compositions containing Surlyn® 1652 and various levels of Absents® 3000 are blended and extruded onto an aluminium foil (38 µm thick) to yield a 25 g/m² of coating of Surlyn® 1652, under the following conditions.
Extruder: Egan 3 1/2", L/D = 30
Temperatures from feed to final zone: 175°, 210°, 245°, 265°, 285°C
Speed: 53 rpm (max - 270 rpm)
Pressure: 59·10⁵ Pa (59 bar)
Die temperature: 285 °C
Air gap: 125 mm
Line speed: 100 m/min

**Table 1 -**

| Extrusion Coating processability | | |
|---|---|---|
| Composition | total neck-in (mm) | drawability (m/min) |
| Surlyn® 1652 | 65 | 250 |
| | | |
| Surlyn® 1652 + 0.5 % Abscents® 3000 | 65 | 290 |
| | | |
| Surlyn® 1652 + 2.0 % Abscents® 3000 | 55 | 260 |

Total "neck-in" (on both edges) is measured under the processing conditions given above. Total neck-in refers to the difference in width between the extrusion die and the coating it produces. It is preferable to minimize neck-in so that coatings have a consistent, uniform width and edge.

Drawability is measured by leaving the extruder rpm at the setting giving 25 g/m² coating at 100 m/min and increasing the line speed until edge-weave of the coating is first observed. High drawability is desirable as it enables high line speeds and therewith improved efficiency of a coating operation.

Films and shaped articles produced from the compositions according to the invention have been found to have extremely low levels of carboxylic acids and aldehydes, which are known sources of odours.

### Odour Analysis

Films extruded onto aluminium foils (as previously described) are heated to 70 °C for one hour. Volatiles produced are trapped in an adsorption tube, Tenax GC (5 mm diameter, 100 mm long) at -15 °C, desorbed under rapid heating at 200 °C (within 50 seconds) and introduced in a gas chromatograph (Hewlett Packard Model 5890A) for separation. The volatiles are then introduced in a mass spectrometer for identification and respirated in parallel to detect the odour-producing components. As indicated in Table 2, the concentration of such strong odour-producing components such as butyric acid, 2-methyl butyric acid, valeric acid, pentanal and hexanal, is greatly reduced.

**Table 2**

| Volatiles (parts per hundred) | | | |
|---|---|---|---|
| Volatile | Surlyn® 1652 | Surlyn® 1652 + 0.5 % Abscents® 3000 | Surlyn® 1652 + 2.0 % Abscents® 3000 |
| carboxylic acid | | | |
| | | | |
| acetic | 57 | 57 | 32 |
| propionic | 135 | 86 | 6 |
| butyric | 12 | 4 | - |
| 2-methyl butyric | 629 | 199 | 7 |
| valeric | 7 | - | - |
| caproic | 4 | - | - |
| | | | |

| aldehyde | | | |
|---|---|---|---|
| | | | |
| formaldehyde | 19 | 13 | 15 |
| acetaldehyde | 30 | 36 | 41 |
| propionaldehyde | 8 | 8 | 1 0 |
| butyraldehyde | 9 | 7 | 4 |
| pentanal | 33 | 19 | - |
| hexanal | 32 | 11 | - |
| Samples of Surlyn® 1652 coated onto aluminium foil as previously described are tested for odour and taste. | | | |

In the odour test, 10.2 cm by 10.2 cm (4 inch by 4 inch) samples are stored in a sealed jar at 40 °C overnight. The samples are afterwards cooled for 1 hour before testing for odour. The samples are rated for intensity of odour on a scale of 1 to 8, with 1 being weakest and 8 being strongest intensity of odour.

In the taste evaluation, samples are formed into an 21.6 cm by 27.9 cm (8.5 inch by 11 inch) pouch and filled with 85 °C water. The pouches are stored at room temperature overnight. The water stored in the pouches is rated for intensity of taste on a scale of 1 to 8, with 1 being weakest and 8 being strongest intensity of taste.

**Table 3 -**

| taste and odour evaluation | | | |
|---|---|---|---|
| | Surlyn® 1652 | Surlyn® 1652 + 0.5 % Abscents® 3000 | Surlyn® 1652 + 2.0 % Abscents® 3000 |
| Flavour | | | |
| | | | |
| overall | 3.5 | 2.0 | 2.0 |
| | | | |
| vinyl | 3.0 | 0 | 0 |
| bitter | 0 | 0 | 1.0 |
| metallic | 0 | 1.0 | 0 |
| | | | |

| Odour | | | |
|---|---|---|---|
| | | | |
| overall | 3.5 | 1.0 | 3.0 |
| | | | |
| polyethylene | 1.5 | 0 | 2.0 |
| sweet plastic | 0 | 1.0 | 0 |
| smoky/rubber | 2.0 | 0 | 0 |
| smoky/musty | 0 | 0 | 2.0 |
| musty | 1.0 | 0 | 0 |

In addition to having inhibited or eliminated undesirable odours and flavours, the thermoplastic compositions according to the invention have been found to possess surprising improvements in performance characteristics. Depending upon the particular end-use application, it can be critical that the film possess a certain level of adhesion to a foil (e.g. aluminium foil) and sealing properties.

### Adhesion to foil

Adhesion to an aluminium foil of thickness 38 µ m is tested using film samples produced by the extrusion coating process previously described. Extruder temperatures are as previously mentioned, except that for compositions based on Surlyn® 1702, the extruder temperature is, from feed to final zone 150°, 170°, 200°, 220°, 230°C, and the die temperature is 230 °C.

**Table 4 -**

| Adhesion to Foil (100 mm/mn cross head speed) | |
|---|---|
| Composition | Adhesion (N/15 mm) |
| | |
| Surlyn® 1652 | 4.1 |
| | |
| Surlyn® 1652 + 0.5 % Abscents® 3000 | 4.1 |
| | |
| Surlyn® 1652 + 2.0 % Abscents® 3000 | 4.5 |
| | |
| Surlyn® 1702 | 6.0 |
| | |
| Surlyn® 1702 + 0.5 % Abscents® 3000 | 6.2 |
| | |
| Surlyn® 1702 + 2.0 % Abscents® 3000 | 6.6 |

### Heat Seal Strength

Film samples are sealed on a KOPP heat sealer at a 1.0 sec dwell time and 0.5 MPa pressure. The seal strength is measured at 100 m/min cross head speed, according to ISO 9001 work instruction T91 of P&IP ETC, Meyrin.

**Table 5 -**

| Heat Seal Strength (N/15 mm) | | | |
|---|---|---|---|
| Seal Bar Temp. (°C) | Surlyn® 1652 | Surlyn® 1652 + 0.5 % Abscents® 3000 | Surlyn® 1652 + 2.0 % Abscents® 3000 |
| | | | |
| 80 | 0.8 | 0.8 | 0.8 |
| 100 | 9.5 | 15 | 12 |
| 120 | 11 | 13 | 11 |

### Hot-Tack Strength

The hot-tack strength of a film is a measure of the strength of a seal made with the film at a given temperature. High hot-tack strength is desirable since the need for cooling seals during, e.g. packaging process is reduced or elimated and packaging rates can thereby be increased. The hot-tack strength of samples is measured using a PACKFORSK hot-tack tester run at 0.3 MPa dwell pressure, 0.5 sec dwell time, 0.2 sec delay time and 150 mm/sec cross head speed. according to ISO 9001 work instruction T92 of P&IP ETC, Meyrin.

**Table 6 -**

| Hot-Tack Strength (N/15 mm) | | | |
|---|---|---|---|
| Seal Bar Temp. (°C) | Surlyn® 1652 | Surlyn® 1652 + 0.5 % Abscents® 3000 | Surlyn® 1652 + 2.0 % Abscents® 3000 |
| 70 | - | 0.2 | 0.3 |
| 80 | 0.5 | 1.0 | 0.8 |
| 90 | 0.6 | 2.8 | 1.0 |
| 100 | 4.5 | 8.0 | 7.0 |
| 110 | 9.0 | 9.0 | 9.0 |

### Coefficient of Friction

It is often desirable that a film has a low coefficient of friction (COF) to enable the film to slide easily against various surfaces during its manufacture, handling and use. It has been found that the films of the present invention have surprising lower COF's as compared to films made from compositions not containing the adsorption agent. COF is measured between two films formed from Surlyn® 1601, at the conditions described in work instruction T75 available from the Packaging and Industrial Polymer Laboratory of the DuPont Company in Meyrin, Switzerland. The results are:

**Table 7 -**

| Coefficient of Friction | | |
|---|---|---|
| % Abscents® 3000 | Melt Temperature | |
| | 190 °C | 225 °C |
| 0 | 0.95 | 3.75 |
| 0.25 | 0.62 | 0.75 |
| 0.50 | 0.60 | 0.75 |
| 1.00 | 0.60 | 0.70 |
| 2.00 | 0.55 | 0.60 |

## Claims

1. A thermoplastic composition comprising (a) a thermoplastic; and (b) an adsorption agent which is a crystalline siliceous molecular sieve, having a framework of tetrahedral oxide units, in which at least 90% of the tetrahedral oxide units are SiO tetrahedra, a pore diameter greater than 0.55 nm (5.5 Angstroms) and a sorption capacity for water of less than 10% by weight at 25°C and 6.13 mbar (4.6 torr), characterized in that the thermoplastic is selected from the group consisting of ethylene/acid copolymers and corresponding ionomers; and ethylene/acid/acrylate terpolymers and corresponding ionomers and that the adsorption agent comprises at least 0.5% by weight of the composition.

2. A composition according to claim 1 wherein component (a) comprises a copolymer of ethylene and acrylic acid or methacrylic acid and corresponding ionomers; a terpolymer of ethylene, acrylic acid or methacrylic acid and an alkyl acrylate or methacrylate, and corresponding ionomers.

3. A composition according to claim 2 wherein component (a) is a copolymer of ethylene and 2 to 50% by weight acrylic or methacrylic acid neutralized up to about 90%.

4. A composition according to claim 3 wherein component (a) is a copolymer of ethylene and 5 to 25% by weight acrylic or methacrylic acid neutralized from 5 to 60%.

5. A composition according to claim 1 wherein the crystalline siliceous molecular sieve has a framework SiO₂/Al₂O₃ molar ratio greater than 35.

6. A thermoplastic film obtainable by extruding the composition according to claim 1.

7. A thermoplastic shaped article obtainable by moulding the composition according to claim 1.

8. The use of an adsorbent to inhibit odours or flavours in films and shaped articles formed from a thermoplastic, the adsorbent being further defined as a crystalline siliceous molecular sieve, having a framework of tetrahedral oxide units, in which at least 90% of the tetrahedral oxide units are SiO tetrahedra, a pore diameter greater than 0.55 nm (5.5 Angstroms) and a sorption capacity for water of less than 10% by weight at 25°C and 6.13 mbar (4.6 torr), characterized in that the thermoplastic comprises an ethylene/acid copolymer or corresponding ionomer or an ethylene/acid/acrylate terpolymer or corresponding ionomer and that the adsorption agent comprises at least 0.5% by weight of the composition.

## Patentansprüche

1. Thermoplastische Zusammensetzung, umfassend (a) einen Thermoplasten und (b) ein Adsorptionsmittel, welches ein kristallines kieselhaltiges Molekularsieb ist, welches ein Gerüst aus tetraedrischen Oxideinheiten, bei welchen wenigstens 90 % der tetraedrischen Oxideinheiten SiO-Tetraeder sind, einen Porendurchmesser von größer als 0,55 nm (5,5 Angström) und eine Sorptionskapazität für Wasser von weniger als 10 Gew.-% bei 25°C und 6,13 mbar (4,6 Torr) aufweist, dadurch gekennzeichnet, daß der Thermoplast ausgewählt ist aus der Gruppe bestehend aus Ethylen/Säure-Copolymeren und entsprechenden Ionomeren und Ethylen/Säure/Acrylat-Terpolymeren und entsprechenden Ionomeren, und daß das Adsorptionsmittel wenigstens 0,5 Gew.-% der Zusammensetzung umfaßt.

2. Zusammensetzung nach Anspruch 1, bei welcher Komponente (a) ein Copolymeres aus Ethylen und Acrylsäure oder Methacrylsäure und entsprechende Ionomere, ein Terpolymeres aus Ethylen, Acrylsäure oder Methacrylsäure und einem Alkylacrylat oder -methacrylat und entsprechende Ionomere umfaßt.

3. Zusammensetzung nach Anspruch 2, bei welcher Komponente (a) ein Copolymeres von Ethylen und 2 bis 50 Gew.-% Acrylsäure oder Methacrylsäure ist, welches bis zu etwa 90 % neutralisiert ist.

4. Zusammensetzung nach Anspruch 3, bei welcher Komponente (a) ein Copolymeres von Ethylen und 5 bis 25 Gew.-% Acrylsäure oder Methacrylsäure ist, welches zu 5 bis 60 % neutralisiert ist.

5. Zusammensetzung nach Anspruch 1, bei welcher das kristalline kieselhaltige Molekularsieb ein SiO₂/Al₂O₃-Gerüst-Molverhältnis von größer als 35 aufweist.

6. Thermoplastische Folie, erhältlich durch Extrudieren der Zusammensetzung gemäß Anspruch 1.

7. Thermoplastischer Formgegenstand, erhältlich durch Formen der Zusammensetzung gemäß Anspruch 1.

8. Verwendung eines Adsorbtionsmittels zur Unterdrückung von Gerüchen oder Aromen in Folien und Formgegenständen, die aus einem Thermoplasten geformt worden sind, wobei das Adsorptionsmittel weiter definiert ist als ein kristallines kieselhaltiges Molekularsieb, welches ein Gerüst aus tetraedrischen Oxideinheiten, bei welchen wenigstens 90 % der tetraedrischen Oxideinheiten SiO-Tetraeder sind, einen Porendurchmesser von größer als 0,55 nm (5,5 Angström) und eine Sorptionskapazität für Wasser von weniger als 10 Gew.-% bei 25°C und 6,13 mbar (4,6 Torr) aufweist, dadurch gekennzeichnet, daß der Thermoplast ein Ethylen/Säure-Copolymeres oder entsprechendes Ionomeres oder ein Ethylen/Säure/Acrylat-Terpolymeres oder entsprechendes Ionomeres umfaßt, und daß das Adsorptionsmittel wenigstens 0,5 Gew.-% der Zusammensetzung umfaßt.

## Revendications

1. Composition thermoplastique comprenant (a) un thermoplastique et (b) un agent adsorbant qui est un tamis moléculaire siliceux cristallin, ayant une ossature d'unités d'oxydes tétraédriques, dans lequel au moins 90% des unités d'oxydes tétraédriques sont des tétraèdres de SiO, ont un diamètre de pores supérieur à 0,55 nm (5,5 Angströms) et une capacité de sorption pour l'eau de moins de 10% en poids à 25°C et 6,13 mbars (4,6 Torr), caractérisée en ce que le thermoplastique est choisi dans le groupe constitué de copolymères éthylène/acide et d'ionomères correspondants; et de terpolymères éthylène/acide/acrylate et d'ionomères correspondants et en ce que l'agent adsorbant constitue au moins 0,5% en poids de la composition.

2. Composition selon la revendication 1, dans laquelle le composant (a) comprend un copolymère d'éthylène et d'acide acrylique ou d'acide méthacrylique et les ionomères correspondants; un terpolymère d'éthylène, d'acide acrylique ou méthacrylique et d'un acrylate ou d'un méthacrylate d'alkyle, et les ionomères correspondants.

3. Composition selon la revendication 2, dans laquelle le composant (a) est un copolymère d'éthylène et de 2% à 50% en poids d'acide acrylique ou méthacrylique neutralisé jusqu'à environ 90%.

4. Composition selon la revendication 3, dans laquelle le composant (a) est un copolymère d'éthylène et de 5% à 25% en poids d'acide acrylique ou méthacrylique neutralisé de 5% à 60%.

5. Composition selon la revendication 1, dans laquelle le tamis moléculaire siliceux cristallin a un rapport molaire d'ossature SiO₂/Al₂O₃ supérieur à 35.

6. Film ou feuille thermoplastique susceptible d'être obtenu(e) en extrudant la composition selon la revendication 1.

7. Article moulé en thermoplastique qui peut être obtenu en moulant la composition selon la revendication 1.

8. Utilisation d'un adsorbant pour inhiber les odeurs ou les parfums de films et d'articles moulés formés à partir d'un thermoplastique, l'adsorbant étant par ailleurs défini comme un tamis moléculaire siliceux cristallin ayant une ossature d'unités d'oxydes tétraédriques, dans laquelle au moins 90% des unités d'oxydes tétraédriques sont des tétraèdres de SiO, ont un diamètre de pore supérieur à 0,55 nm (5,5 Angströms) et une capacité de sorption pour l'eau de moins de 10% en poids à 25°C et 6,13 mbars (4,6 Torr), caractérisée en ce que le thermoplastique comprend un copolymère éthylène/acide ou un ionomère correspondant ou un terpolymère éthylène/acide/acrylate ou un ionomère correspondant et en ce que l'agent adsorbant constitue au moins 0,5% en poids de la composition.
